# EUROPEAN PATENT SPECIFICATION

(11) **EP 1 988 321 B1**
(45) Date of publication and mention of the grant of the patent: **16.03.2011**
(21) Application number: 07107510.5
(22) Date of filing: 04.05.2007
(51) Int. Cl.: F16L 29/04, F28D 15/02

(54) **Device for the interconnection of hydraulic circuits in a mono-tube system for heat delivering with both steam and liquid circulation**
Gerät zur Verbindung hydraulischer Schaltungen in einem einrohrigen System zum Wärmetransport mit Dampf- und Flüssigkeitszirkulation
Dispositif d'interconnexion de circuits hydrauliques dans un système monotube pour transport de chaleur grâce à la circulation de vapeur et liquide

(43) Date of publication of application: 05.11.2008
(73) Proprietor: STRICTES S.R.L., 20127 Milano (IT)
(72) Inventor: Dall'Oglio, Stefano, 20146 Milano (IT); Dall'Oglio, Giorgio, 20146 Milano (IT)
(74) Representative: Gervasi, Gemma

(56) References cited:
- EP-A- 0 013 544
- DE-U1- 8 408 764
- US-A1- 2004 238 048

## Description

### FIELD OF THE INVENTION

The present invention is related to the field of energetic control and upgrading of buildings and in particular to the field of the employment of solar energy for the heating of fluids with heat transfer between the external environment and the building.

### STATE OF THE ART

In the field of solar energy, the systems for the production of hot water, commonly referred to as thermal solar panels, are well known. Said systems are adapted to collect and transfer thermal energy from said panels to means of energy storage and / or users through two pipes transferring a suitable fluid which carries said energy.

An analogous system is employed for the transfer of the cooling fluid of electro-solar panels required to maximise the efficiency of the panel which is inversely proportional to the temperature of to the electro-generator cells.

Standard solutions employing plane panels are characterised by limited temperature gradient of the fluid which delivers the heat, temperature that can reach up to 80°C. These solutions find advantageously application in mono-familiar houses.

Other solutions employ absorbing panels under vacuum, characterised by high temperature gradient of the fluid which delivers the heat temperature that can reach up to 200°C. These solutions find advantageously application in large dimensions systems, e.g. buildings provided suitable thermally isolated heat transfer devices comprising high efficiency heat exchangers. In this case the solar panel system is integrated in the energy management of the building as one of the sub-systems which are part of the building integrated management system.

The need of transferring high quantities of heat in small diameter pipes, having low heat losses between heaters and users, requires the use of a suitable fluid which exploits the vaporisation heat in the energy collection point and releases the heat by condensing the vapour in the point of heat delivery.

The most advanced systems employ a heat pipe which is a mono-pipe sealed component comprising: the vaporisation section, the heat transfer section and the condensation section allowing the condensed liquid to go back to the heating area in counter-current with respect to the vapour.

Said heat pipe brings along another big advantage which is the high speed of transfer between the vaporisation point and the condensation point. A standard heat pipe is characterised by heat transfer times up to 1000 times shorter than those achieved by conduction in a copper bar having same diameter. In a heat pipe the transfer time of the vapour between evaporation point and condensation point is extremely short and the temperature of the vapour remains almost constant thus minimising energy losses.

Moreover the heat pipe does not require an independent pumping system to deliver vapour fluids and condensed liquids when the installation is designed to exploit gravity for this purpose.

The choice of the fluid contained in the single heat pipe and the value of the filling pressure depend on the boiling temperature and on the condensation temperature required for the specific application; in case of solar panel for buildings water is employed together with suitable chemicals to reduce pressure inside the pipe: the pressure inside the pipe when no vapour is present, i.e. when temperature is lower than vaporisation temperature, is lower than ambient pressure.

Flexible heat pipes are well known for installation in heat transfer systems for buildings. It is mandatory that said heat pipes are perfectly sealed and have no leakage in order to have a constant internal working pressure and thus an optimised working temperature. The testing of said heat pipes evaluates their sealing in limit operating conditions to guarantee an operating life of at least 10 years. These procedures have to be carried out during production and they are normally expensive, time consuming and difficult to standardise since the components to be tested have different lengths and dimensions according to the building installation requirements.

To overcome said difficulties the following solutions are commonly employed: In the first one, largely adopted in small buildings, each heat collector and related subassembly is confined and packed in a single structure that exchange water only with the building water piping network through two standard pipes, one for cold water input to the solar subsystem, one for hot water output to the building. The second solution consists of a heat-pipe extended up to the building pipe network and makes use of a standard single tube heat-pipe between the external solar panel and the building. This solution brings along the drawbacks of a high level of complexity because the system needs to be sealed during production phase and the need of interconnecting standard components (external solar panel, internal heat exchanger) with heat pipes of different lengths according to building requirements.

Regarding the pipe connectors available in the state of the art, US Patent application US2004/0238048 discloses a female and a male coupler of a pipe coupling that are easy to assemble and have a minimised passage resistance. The female coupler includes a cylindrical female coupler body adapted to receive the male coupler from a front end opening thereof. European patent application EP0013544 discloses a threaded sleeve coupling comprising two half-joints which can be screwed at the end of the pipes and between them in a water-tight fashion, each comprising, within the hollow interior, a sealing valve compressed by a spring with an overlapping head, such that the two heads are to be pushed back during screwing, opening the passage for the fluid in the two pipes.

### SCOPE OF THE INVENTION

A scope of the present invention is to introduce a new and more efficient solution to the technical problem of producing different length heat pipes provided with leakage-proof sealed connectors to realise installation of standard external solar panels and standard heat exchangers.

The present invention introduces a heat pipe provided with suitable connectors comprising two elements adapted to be coupled in a gas leakage-proof way and to work even if in condition of internal pressure which is much lower than ambient pressure.

Standard components like external solar panel and internal heat exchanger are provided, according to the present invention, with one element of said leakage-proof connector. Non standard components like different length connecting pipes, are provided with one element of said leakage-proof connector at each end. Every section of the pipe is thus leakage-proof and said connectors allow the lossless insertion of the non-standard pipe between two standard elements in a way to restore the overall original efficiency of the heat pipe.

The device, according to the present invention, allows the production of external solar panels and internal heat exchanger without any non-standard feature thus reducing production costs and times.

Furthermore, the device according to the present invention, allows the production of pipes in a standard way since every possible length pipe is realised by two standard phases: cutting said pipe according to the required length and assembling said pipes with the connector according to the present invention.

The device according to the present invention proves to be useful also in testing phase since it allows sub-systems to be easily interconnected and disconnected after the testing is complete.

### SUMMARY OF THE INVENTION

The device according to the present invention is characterised in that it comprises two interfaceable elements; a first element adapted to be installed on the solar panel or on the heat exchanger of the heat transfer system; the second element adapted to be installed on each interconnecting pipe to be used and provided with wide section and a very small dead volume, in order to guarantee no leakage even in case of very low absolute pressure.

### LIST OF DRAWINGS

Fig. 1 shows the device according to the present invention split in its modules and parts.
Fig. 2a shows a longitudinal section of the connector according to the present invention where the first valve body type "F" 20 is facing the second valve body type "M" 30, after the connection.
Fig. 2b shows a longitudinal section of the connector according to the present invention where the first valve body type "F" 20 is facing the second valve body type "M" 30, before the connection.
Fig. 3 shows the shape of conic grooves of a first hollow element and a third hollow element.

### DETAILED DESCRIPTION OF THE INVENTION

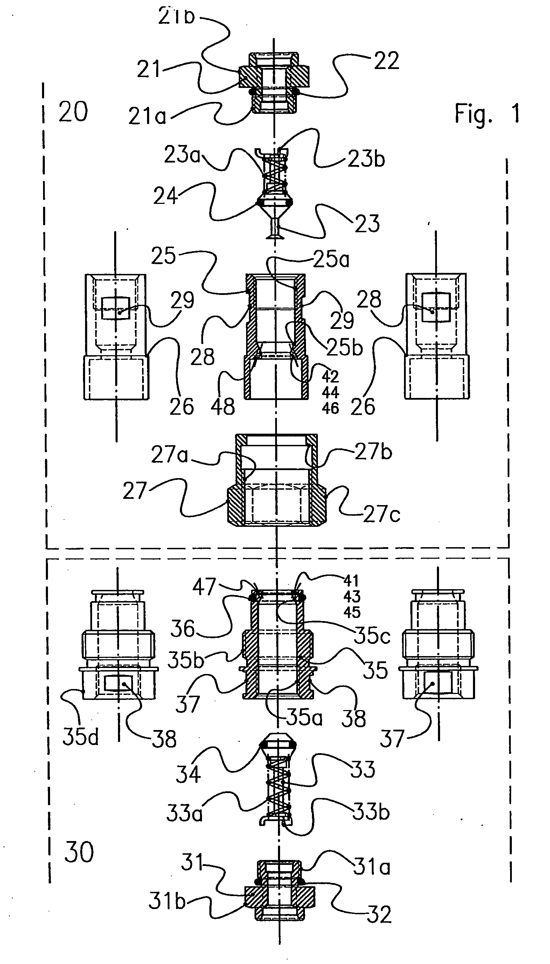

With reference to Fig. 1, the device for the interconnection of hydraulic circuits allowing bidirectional flow of fluids according to the present invention comprises two modules: a first valve body type "F" (female connector) 20 and a second valve body type "M" (female connector) 30. Said first valve body type "F" 20 comprises:
- a first coupling element 21 for connections with the external pipe, provided with a protruding annular section 21b shaped like a nut and preferably further provided with an external thread 21a;
- at least one o-ring type gasket 22 associated with said first coupling element 21;
- one conic shutter 23 provided with stem, spring 23a and support tripod, bearing one o-ring type gasket 24;
- a first hollow connection element 25, provided with: an internal thread 25a for connection with said first coupling element 21, a conic groove 25b adapted to couple with said o-ring type gasket 24 assembled on said conic shutter 23, two flat surfaces 28 and 29 to help the alignment of a counterpart 35, and with a shoulder 26 .
- at least a second hollow connection element 27 provided with: a protruding annular rim 27c shaped like a nut, an internal thread 27a and at least a planar surface 27b, preferably of circular shape, to hold said first hollow element 25 with said shoulder 26;

Said second valve body type "M" 30 comprises:
- a second coupling element 31 for connections with external pipes, provided with a protruding annular section 31b shaped like a nut and preferably further provided with an external thread 31a;
- an o-ring type gasket 32 associated with said second coupling element 31;
- a conic shutter 33 provided with spring 33a and support tripod and bearing one o-ring type gasket 34;
- a third hollow connection element 35 provided with: an internal thread 35a for connection with said coupling element 31, a conic groove 35c adapted to couple with said o-ring type gasket 34 assembled on said conic shutter 33, an external thread 35b for connection with said second hollow connection element 27, a protruding annular section and two flat surfaces 37 and 38 that may be used to help the alignment between said elements 25, 35 during connection phase;
- an o-ring type gasket 36 assembled on the terminal section of said third hollow connection element 35.

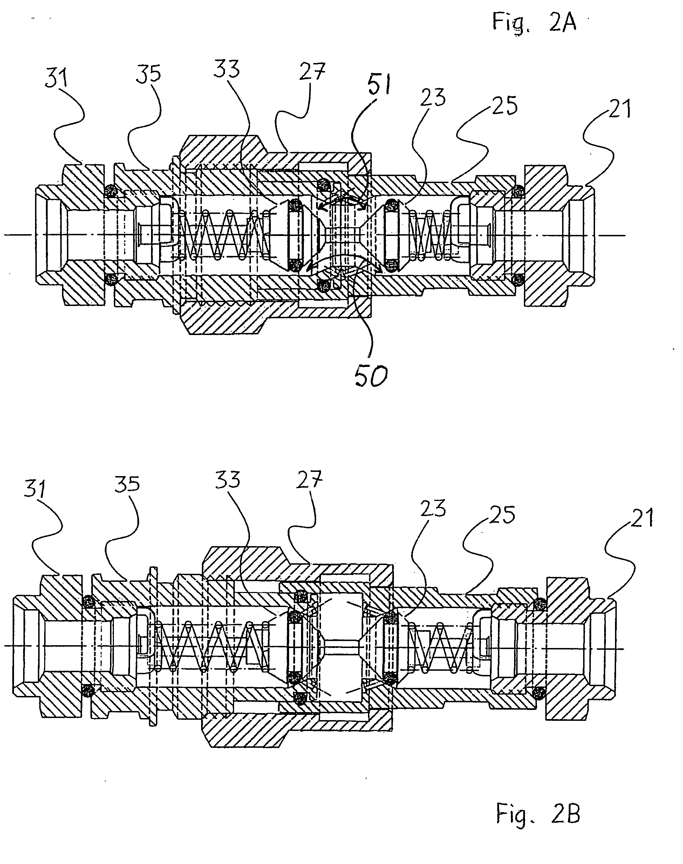

With reference to fig. 2b, a longitudinal section of the connector according to the present invention is displayed where the first valve body type "F" 20 is facing the valve body type "M" 30, before the connection of said second hollow element 27 with said third hollow element 35.

With reference to fig. 2a a longitudinal section of the connector according to the present invention is displayed where the first valve body type "F" 20 is facing the valve body type "M" 30 after the connection of said second hollow element 27 with said third hollow element 35, in ready-to-operate condition. In this position said shutter 23, 33 lean on each other while said two springs are compressed allowing the fluid a free passage trough the connector according to the present invention.

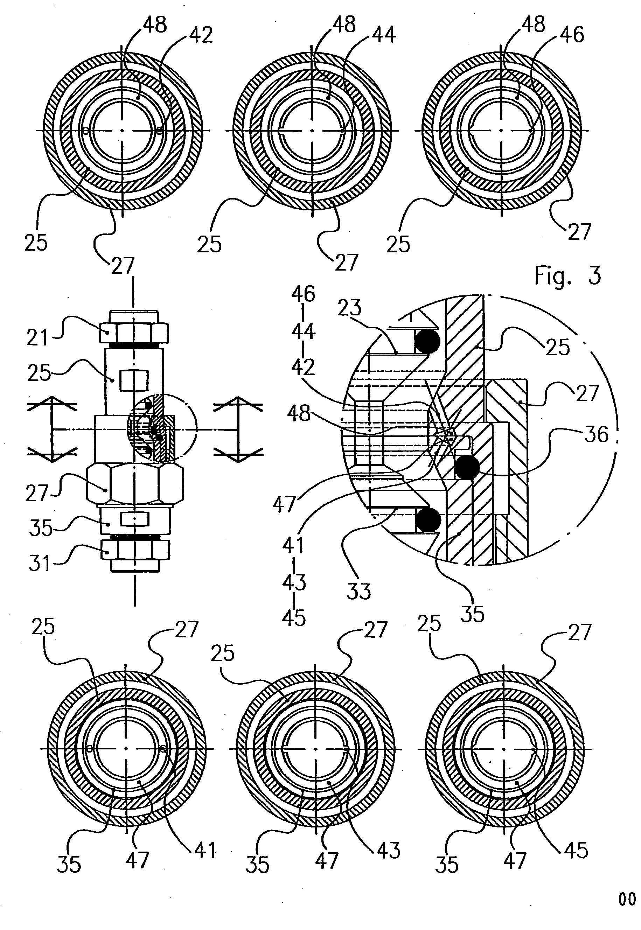

Enclosed Fig. 3 displays the device according to the present invention with said first valve body type "F" (female connector) 20 and said second valve body type "M" (female connector) 30 tightly connected in operating conditions.

With reference to the magnified section in Fig. 3, a detail of said first hollow element 25 provided with a through opening 42, and of said third hollow element 35 provided with a through opening 41 are represented; said through openings 41, 42 correspond to grooves 47, 48 adapted to allow the flow of the fluid in parallel with the main passage 50 thus coping with possible misalignments between said circular through holes 41, 42.

During operating conditions a high speed vapour flux flows through the pipe and transfers vaporisation thermal energy from the hot element to the cold element which, by subtracting the energy content of the vapour, causes the condensation of the vapour thus forming back the liquid phase which flows in opposite direction with respect to the vapour to go back to the hot element.

The counter flow of liquid and vapour phases causes a perturbing effect on said liquid and vapour flows due to the presence of small vortexes caused by variation in the pipe diameter. This phenomenon is more manifest in the region close to the connector where the effects of diameter reduction and fluxes direction variation add up. Since the required section for the passage of the liquid phase is only about 1% of the section required for the passage of the vapour phase, a suitably small circular channel 51 is realised through said hole 42 - on the connector internal sides of said first hollow element 25 - and said hole 41 of said third hollow element 35 and, since this passage of the liquid phase is realised in the region of maximum perturbation, said openings can be preferably placed by said region of maximum perturbation. Said openings can be suitably shaped as a hole or a slot. With reference to Fig. 3, said openings are represented as slots 43, 44, 45, 46. Since the liquid tends to flow in the lower part of the pipe due to gravity, it's possible to limit the number of said openings in case the overall system is provided with alignment means for said first and third hollow elements 25, 35 and for the correct positioning, in relation to gravity, of the first valve body type "F" 20 facing the valve body type "M" 30 in order to place said openings in its lower part. In this regard, with reference to Fig. 1, said first hollow element 25 is provided with two plane surfaces 28 and 29, and said third hollow element 35 is provided with two plane surfaces 37 and 38 that are adapted to correctly align said first and third hollow elements 25, 35.

Said alignment is not necessary if said openings 41, 42, 43, 44, 45, 46 are evenly distributed on the circular surface 47, 48.

Operation modes of the connector according to the present invention are the following:

A "storage mode", displayed in fig. 2b, where said first valve body type "F" 20 and said second valve body type "M" 30 are separated and hermetically sealed thus keeping the internal pressure of vapour and liquid, possibly present in the circuit, constant. The hermetically sealed status of the two half-connectors according to the present invention is guaranteed by the o-ring gaskets 22, 34.

A "working mode" as displayed in Fig. 2a where said first valve body type "F" 20 and said second valve body type "M" 30 are connected together and allow the vapour and liquid phases present in the pipe connected to said coupling element 21 of said first valve body type "F" 20, and in the pipe connected to said coupling element 31 of said second valve body type "M" 30, to flow while maintaining the pressure value constant.

Operation in said "working mode" is made possible by the tight connection between said first and said third hollow elements 25, 35 which exert, in turn, a suitable compression on the springs of said shutters 23, 33.

## Claims

1. Device for the interconnection of hydraulic circuits allowing bidirectional flow of fluids through a main passage (50) and a channel (51) comprising: a first (20) and a second (30) valve body, adapted to connect with each other, said first valve body comprising: a first coupling element (21) for connections with external pipes; at least one o-ring type gasket (22) associated with said first coupling element (21); a shutter (23) provided with stem, spring (23a), support tripod and related seal means (24); a first hollow connection element (25) adapted to connect with said first coupling element (21); a second hollow connection element (27); said second valve body (30) comprising: a second coupling element (31) for connections with external pipes and related seal means (32); a shutter (33) provided with spring (33a), support tripod and related seal means (34); a third hollow connection element (35) adapted to connect with said second coupling element (31), and with said second hollow connection element (27) **characterised in that** said first hollow connection element (25) and said third hollow connection element (35) further comprise through openings (41, 42), realising said channel (51), adapted to allow the flow of fluids in parallel with the main passage (50).

2. Device according to claim 1 **characterised in that** said seal means (24, 34) related to said shutters (23, 33) and said seal means (32) related to said second coupling element (31) comprise o-ring type gasket.

3. Device according to claims 1 - 2 **characterised in that** said first coupling element (21) and said second coupling element (31) comprise a protruding annular section (21 b, 31 b) shaped like a nut.

4. Device according to claims 1 - 3 **characterised in that** said second hollow connection element (27) comprises a protruding annular rim (27c) shaped like a nut.

5. Device according to claims 1 - 4 **characterised in that** said first coupling element (21) further comprises an external thread (21 a) and said first hollow connection element (25) comprises an internal thread (25a) adapted to engage with said external thread (21 a) of said first coupling element (21).

6. Device according to claims 1 - 5 **characterised in that** said second hollow connection element (27) further comprises an internal thread (27a), said second coupling element (31) comprises an external thread (31a) and said third hollow connection element (35) comprises an internal thread (35a) adapted to engage with said external thread (31a) of said second coupling element (31) and an external thread (35b) adapted to engage with said internal thread (27a) of said second hollow connection element (27).

7. Device according to claims 1 - 6 **characterised in that** said shutters (23, 33) are of the conic type.

8. Device according to claims 2 - 7 **characterised in that** said first hollow connection element (25) further comprises: a conic groove (25b) adapted to couple with said o-ring type gasket (24) associated to said conic shutter (23); two flat surfaces (28, 29) adapted to help the alignment of said third hollow connection element (35); and a shoulder (26) adapted to engage with said second hollow connection element (27).

9. Device according to claim 8 **characterised in that** said second hollow connection element (27) further comprises at least one planar surface (27b) adapted to hold said first hollow element (25) with said shoulder (26).

10. Device according to claim 9 **characterised in that** said at least one planar surface (27b) is of circular shape.

11. Device according to claims 2 - 10 **characterised in that** said third hollow connection element (35) further comprises a conic groove (35c) adapted to couple with said o-ring type gasket (34) associated to said conic shutter (33), a protruding annular section (35d) and two flat surfaces (37, 38) adapted to help the alignment between said first (25) and said third hollow connection element (35) during connection phase.

12. Device according to claims 1 - 11 **characterised in that** said third hollow connection element (35) further comprises an o-ring type gasket (36) assembled on its terminal section.

13. Device according to claims 1 - 12 **characterised in that** said through openings (41, 42) correspond to grooves (47, 48) of said first hollow connection element (25) and said third hollow connection element (35).

14. Device according to claim 13 **characterised in that** said through openings (41, 42) are shaped as circular holes (43, 44) or as slots (45, 46).

15. Device according to claims 1 - 14 **characterised in that** said first (20) valve body is of type "F" - female connector and said second (30) valve body is of type "M" - male connector.

## Patentansprüche

1. Vorrichtung für die Verbindung von Hydraulikkreisen, die die doppelt gerichtete Strömung von Fluiden durch einen Hauptdurchlass (50) und durch einen Kanal (51) zulässt, wobei die Vorrichtung umfasst: ein erstes (20) und ein zweites (30) Ventilgehäuse, die miteinander verbunden werden können, wobei das genannte erste Ventilgehäuse umfasst: ein erstes Kopplungselement (21) für Verbindungen mit äußeren Rohren; wenigstens eine Dichtung (22) vom O-Ring-Typ, die dem genannten ersten Kopplungselement (21) zugeordnet ist; einen Verschluss (23), der mit einer Spindel, mit einer Feder (23a), mit einem Stützdreibein und mit zugehörigen Dichtungsmitteln (24) versehen ist; ein erstes hohles Verbindungselement (25), das mit dem genannten ersten Kopplungselement (21) verbunden werden kann; ein zweites hohles Verbindungselement (27); wobei das genannte zweite Ventilgehäuse (30) umfasst: ein zweites Kopplungselement (31) für Verbindungen mit äußeren Rohren und mit zugehörigen Dichtungsmitteln (32); einen Verschluss (33), der mit einer Feder (33a), mit einem Stützdreibein und mit zugehörigen Dichtungsmitteln (34) versehen ist; ein drittes hohles Verbindungselement (35), das mit dem genannten zweiten Kopplungselement (31) und mit dem genannten zweiten hohlen Verbindungselement (27) verbunden werden kann, **dadurch gekennzeichnet, dass** das genannte erste hohle Verbindungselement (25) und das genannte dritte hohle Verbindungselement (35) ferner den genannten Kanal (51) realisierende Durchgangsöffnungen (41, 42) umfassen, die die Strömung von Fluiden parallel zu dem Hauptdurchlass (50) zulassen können.

2. Vorrichtung gemäß Anspruch 1, **dadurch gekennzeichnet, dass** die genannten Dichtungsmittel (24, 34), die zu den genannten Verschlüssen (23, 33) gehören, und die genannten Dichtungsmittel (32), die zu dem genannten zweiten Kopplungselement (31) gehören, eine Dichtung vom O-Ring-Typ umfassen.

3. Vorrichtung gemäß Anspruch 1-2, **dadurch gekennzeichnet, dass** das genannte erste Kopplungselement (21) und das genannte zweite Kopplungselement (31) einen vorstehenden ringförmigen Abschnitt (21 b, 31 b) umfassen, der wie eine Mutter geformt ist.

4. Vorrichtung gemäß Anspruch 1-3, **dadurch gekennzeichnet, dass** das genannte zweite hohle Verbindungselement (27) einen vorstehenden ringförmigen Rand (27c) umfasst, der wie eine Mutter geformt ist.

5. Vorrichtung gemäß Anspruch 1-4, **dadurch gekennzeichnet, dass** das genannte erste Kopplungselement (21) ferner ein Außengewinde (21 a) umfasst und dass das genannte erste hohle Verbindungselement (25) ein Innengewinde (25a) umfasst, das mit dem genannten Außengewinde (21 a) des genannten ersten Kopplungselements (21) in Eingriff gelangen kann.

6. Vorrichtung gemäß Anspruch 1-5, **dadurch gekennzeichnet, dass** das genannte zweite hohle Verbindungselement (27) ferner ein Innengewinde (27a) umfasst, dass das genannte zweite Kopplungselement (31) ein Außengewinde (31 a) umfasst und dass das genannte dritte hohle Verbindungselement (35) ein Innengewinde (35a), das mit dem genannten Außengewinde (31 a) des genannten zweiten Kopplungselements (31) in Eingriff gelangen kann, und ein Außengewinde (35b), das mit dem genannten Innengewinde (27a) des zweiten hohlen Verbindungselements (27) in Eingriff gelangen kann, umfasst.

7. Vorrichtung gemäß Anspruch 1-6, **dadurch gekennzeichnet, dass** die genannten Verschlüsse (23, 33) vom konischen Typ sind.

8. Vorrichtung gemäß Anspruch 2-7, **dadurch gekennzeichnet, dass** das genannte erste hohle Verbindungselement (25) ferner umfasst: eine konische Rille (25b), die mit der genannten Dichtung (24) vom O-Ring-Typ, die dem genannten konischen Verschluss (23) zugeordnet ist, gekoppelt werden kann; zwei flache Oberflächen (28, 29), die bei der Ausrichtung des genannten dritten hohlen Verbindungselements (35) helfen können; und eine Schulter (26), die mit dem genannten zweiten hohlen Verbindungselement (27) in Eingriff gelangen kann.

9. Vorrichtung gemäß Anspruch 8, **dadurch gekennzeichnet, dass** das genannte zweite hohle Verbindungselement (27) ferner wenigstens eine planare Oberfläche (27b) umfasst, die das genannte erste hohle Element (25) mit der genannten Schulter (26) halten kann.

10. Vorrichtung gemäß Anspruch 9, **dadurch gekennzeichnet, dass** die genannte wenigstens eine planare Oberfläche (27b) eine Kreisform aufweist.

11. Vorrichtung gemäß Anspruch 2-10, **dadurch gekennzeichnet, dass** das genannte dritte hohle Verbindungselement (35) ferner eine konische Rille (35c), die mit der dem genannten konischen Verschluss (33) zugeordneten genannten Dichtung (34) vom O-Ring-Typ gekoppelt werden kann, einen vorstehenden ringförmigen Abschnitt (35d) und zwei flache Oberflächen (37, 38), die bei der Ausrichtung zwischen dem genannten ersten (25) und dem genannten dritten hohlen Verbindungselement (35) während der Verbindungsphase helfen können, umfasst.

12. Vorrichtung gemäß Anspruch 1-11, **dadurch gekennzeichnet, dass** das genannte dritte hohle Verbindungselement (35) ferner eine Dichtung (36) vom O-Ring-Typ umfasst, die an ihrem Endabschnitt montiert ist.

13. Vorrichtung gemäß Anspruch 1-12, **dadurch gekennzeichnet, dass** die genannten Durchgangsöffnungen (41, 42) Ringen (47, 48) des genannten ersten hohlen Verbindungselements (25) und des genannten dritten hohlen Verbindungselements (35) entsprechen.

14. Vorrichtung gemäß Anspruch 13, **dadurch gekennzeichnet, dass** die genannten Durchgangsöffnungen (41, 42) als kreisförmige Löcher (43, 44) oder als Schlitze (45, 46) geformt sind.

15. Vorrichtung gemäß Anspruch 1-14, **dadurch gekennzeichnet, dass** das genannte erste (20) Ventilgehäuse ein Innenverbinder vom "F"-Typ ist und das genannte zweite (30) Ventilgehäuse eine Außenverbinder vom "M"-Typ ist.

## Revendications

1. Dispositif pour l'interconnexion de circuits hydrauliques permettant l'écoulement bidirectionnel de fluides à travers un passage principal (50) et un canal (51) comprenant : un premier (20) et un deuxième (30) corps de soupape, adaptés pour se raccorder entre eux, ledit premier corps de soupape comprenant : un premier élément de couplage (21) pour des connexions avec des tuyaux externes ; au moins un joint de type joint torique (22) associé avec ledit premier élément de couplage (21) ; un obturateur (23) prévu avec une tige, un ressort (23a), un trépied de support et des moyens d'étanchéité relatifs (24) ; un premier élément de connexion creux (25) adapté pour se raccorder avec ledit premier élément de couplage (21) ; un deuxième élément de connexion creux (27) ; ledit deuxième corps de soupape (30) comprenant : un deuxième élément de couplage (31) pour les connexions avec des tuyaux externes et des moyens d'étanchéité relatifs (32) ; un obturateur (33) prévu avec un ressort (33a), un trépied de support et des moyens d'étanchéité relatifs (34) ; un troisième élément de connexion creux (35) adapté pour se raccorder avec ledit deuxième élément de coulage (31), et avec ledit deuxième élément de connexion creux (27), **caractérisé en ce que** ledit premier élément de connexion creux (25) et ledit troisième élément de connexion creux (35) comprennent en outre des ouvertures de passage (41, 42), réalisant ledit canal (51), adaptées pour permettre l'écoulement des fluides en parallèle avec le passage principal (50).

2. Dispositif selon la revendication 1, **caractérisé en ce que** lesdits moyens d'étanchéité (24, 34) relatifs auxdits obturateurs (23, 33) et lesdits moyens d'étanchéité (32) relatifs audit deuxième élément de couplage (31) comprennent un joint de type joint torique.

3. Dispositif selon les revendications 1 à 2, **caractérisé en ce que** ledit premier élément de couplage (21) et ledit deuxième élément de couplage (31) comprennent une section annulaire en saillie (21b, 31b) formée comme un écrou.

4. Dispositif selon les revendications 1 à 3, **caractérisé en ce que** ledit deuxième élément de connexion creux (27) comprend un bord annulaire en saillie (27c) formé comme un écrou.

5. Dispositif selon les revendications 1 à 4, **caractérisé en ce que** ledit premier élément de couplage (21) comprend en outre un filetage externe (21a) et ledit premier élément de connexion creux (25) comprend un filetage interne (25a) adapté pour se mettre en prise avec ledit filetage externe (21a) dudit premier élément de couplage (21).

6. Dispositif selon les revendications 1 à 5, **caractérisé en ce que** ledit deuxième élément de connexion creux (27) comprend en outre un filetage interne (27a), ledit deuxième élément de couplage (31) comprend un filetage externe (31a) et ledit troisième élément de connexion creux (35) comprend un filetage interne (35a) adapté pour se mettre en prise avec ledit filetage externe (31a) dudit deuxième élément de couplage (31) et un filetage externe (35b) adapté pour se mettre en prise avec ledit filetage interne (27a) dudit deuxième élément de connexion creux (27).

7. Dispositif selon les revendications 1 à 6, **caractérisé en ce que** lesdits obturateurs (23, 33) sont de type conique.

8. Dispositif selon les revendications 2 à 7, **caractérisé en ce que** ledit premier élément de connexion creux (25) comprend en outre : une rainure conique (25b) adaptée pour se coupler avec ledit joint de type joint torique (24) associé audit obturateur conique (23) ; deux surfaces plates (28, 29) adaptées pour aider l'alignement dudit troisième élément de connexion creux (35) ; et un épaulement (26) adapté pour se mettre en prise avec ledit deuxième élément de connexion creux (27).

9. Dispositif selon la revendication 8, **caractérisé en ce que** ledit deuxième élément de connexion creux (27) comprend en outre au moins une surface plane (27b) adaptée pour maintenir ledit premier élément creux (25) avec ledit épaulement (26).

10. Dispositif selon la revendication 9, **caractérisé en ce que** ladite au moins une surface plane (27b) a une forme circulaire.

11. Dispositif selon les revendications 2 à 10, **caractérisé en ce que** ledit troisième élément de connexion creux (35) comprend en outre une rainure conique (35c) adaptée pour se coupler avec ledit joint de type joint torique (34) associé audit obturateur conique (33), une section annulaire en saillie (35d) et deux surfaces plates (37, 38) adaptées pour aider l'alignement entre lesdits premier (25) et troisième éléments de connexion creux (35) pendant la phase de connexion.

12. Dispositif selon les revendications 1 à 11, **caractérisé en ce que** ledit troisième élément de connexion creux (35) comprend en outre un joint de type joint torique (36) assemblé sur sa section terminale.

13. Dispositif selon les revendications 1 à 12, **caractérisé en ce que** lesdites ouvertures de passage (41, 42) correspondent aux rainures (47, 48) dudit premier élément de connexion creux (25) et dudit troisième élément de connexion creux (35).

14. Dispositif selon la revendication 13, **caractérisé en ce que** lesdites ouvertures de passage (41, 42) sont formées comme des trous circulaires (43, 44) ou comme des fentes (45, 46).

15. Dispositif selon les revendications 1 à 14, **caractérisé en ce que** ledit premier corps de soupape (20) est du type « F » - connecteur femelle et ledit deuxième corps de soupape (30) est du type « M » - connecteur mâle.
